# EUROPÄISCHE PATENTANMELDUNG

(11) **EP 2 620 645 A2**
(43) Veröffentlichungstag der Anmeldung: **31.07.2013**
(21) Anmeldenummer: 13405006.1
(22) Anmeldetag: 25.01.2013
(51) Int. Cl.: F03G 1/00, F03G 7/10

(54) **Verfahren zur energetischen Ausnutzung von existenten Kräften (Energien), ohne dass sich diese bewegen**

(30) Priorität: 30.01.2012 CH 125122012
(71) Anmelder: Girardelli, Helmut, 9431 Oberegg Al (CH)
(72) Erfinder: Girardelli, Helmut, 9431 Oberegg Al (CH)

(57) **Zusammenfassung**

Die Einrichtung zur Durchführung des vorliegenden Verfahrens umfasst eine Führungsrolle (2), in deren Mantelfläche Bahnen (5) ausgeführt sind. Die vorliegende Einrichtung umfasst ferner zumindest ein Rad (1), welches zur Zusammenarbeit mit der Führungsrolle (2) ausgebildet ist. Die Umfangsfläche des Rades (1) ist mit Gleitelementen (6) versehen, welche sich in den Bahnen (5) der Führungsrolle (2) bewegen können. Die Achsen der Führungsrolle (2) und des Rades (1) stehen unter einem Winkel zueinander, vorteilhaft rechtwinklig zueinander.

Die Aufgabe der vorliegenden Erfindung besteht darin, eine statisch - existente Energie in Bewegung überzuleiten, ohne die Position dieser betreffenden Energie zu verändern, abgesehen von Veränderungen des Wirkungsgrades dieses ansonsten statisch verbleibenden Energiespenders.

## Beschreibung

Ohne Energie ist die moderne industrialisierte Menschheit nicht lebensfähig, oder zumindest nur dann, wenn sich die Bevölkerung auf ca. 1/3 der derzeitigen 7 Milliarden reduziert - wer aber will das schon. Damit aber diese Energie auch all jene, welche sie benötigen erreicht, überzieht bereits ein ziemlich dichtes Netz von Stromleitungen unseren Planeten, ähnlich den blutführenden Adern im Körper. Dieser elektrische Strom muss jedoch vorher auch produziert werden. Dies wird von Fluss-, Speicher-, Hochdruck- und Gezeitenkraftwerken relativ sauber und umweltfreundlich bewerkstelligt. Das "verbrauchte" Wasser wird nächtens sogar mit überschüssigem Strom vielerorts wieder hochgepumpt, damit - das Wasser - dann zu Stosszeiten weiteremale dringendst benötigten Strom erzeugt.

Trotzdem: Vielerorts gibt es massive Proteste von Anwohnern gegen neue Kraftwerke dieser Art und deren Leitungen! Ausserdem ist die Wasserkraft in der Nähe von Ballungsräumen bereits hochprozentig erschlossen. Nur die Gezeitenkraftwerk wären vielfach noch möglich. Diese aber sind mit grossem finanziellen Aufwand verbunden, was sich dann wiederum auf den Strompreis auswirkt.

Aber da existieren dann noch enorme Reserven an Braun- und Steinkohlevorkommen. Allerdings ist die Verbrennung dieser mit erderwärmendem CO2 -Ausstoss verbunden und die Vorkommen oberhalb von 1000 Metern Tiefe sind zum Grossteil bereits abgebaut. Erdöl wird in absehbaren Zeiträumen nur noch in den Ozeanen zu finden und zu fördern sein und verursacht bei der Verwertung ebenfalls CO2. Auch die Gasvorkommen sind als endlich zu bewerten und mit dem umweltschädlichen CO2 verbunden. Also setzt die Menschheit die Hoffnungen auf Wind- und Sonnenenergie. Beide sind eigentlich unerschöpflich und belasten keinesfalls die Umwelt. Aber niemand weiss, wann der Wind weht und niemand weiss genau zu jeder Tageszeit, wann die Sonne scheint und in der Nacht scheint sie sowieso nicht. Also sind hier ausser Stromleitungen noch Batterien oder andere aufwendige Energieträger notwendig um den jeweiligen Bedarf abzudecken. Alles kostet zusätzlich.

Der Klimawandel bedingt, laut übereinstimmenden Analysen der Wirtschaft, eine ausschliessliche Nutzung der CO2 - freien Energie. Dies dürfte jedoch zu einer kauf finanzierbaren Vorgabe werden, zumal mit der - mittlerweile verpönten und verhassten Atomenergie und deren "Nuclear-Abfall-Endlagerungsproblemen" nicht mehr uneingeschränkt gerechnet werden darf.

Da wären dann noch geothermische Möglichkeiten in Bezug auf Energieproduktionen zu nennen. Ausser dass diese ebenfalls die schwerbekämpften Stromleitungen jedes Einzelnen Nachteil ersichtlich.

Die Ölsaaten sollten bei solchen Analysen nicht vergessen werden, denn sie verursachen bei der Verbrennung einen etwas geringem CO2 - Ausstoss. Jedoch benötigt man für diese riesige Anbauflächen, welche dann später fehlen könnten um die 7, oder 10, oder 15 Milliarden Menschenkinder zu ernähren.

In Anbetracht dieser existenten Situation bezüglich Energie, deren Kosten, Beschaffung und Auswirkung auf den klimatischen Zustand des Planeten, ist es notwendig eine latent und unerschöpflich vorhandene, aber unbewegliche Energie zu nutzen: nämlich die Gravitation. (Man kann diese auch ersetzen: z.B. mittels Federkraft ect.; in diesem Fall - ebenfalls unbeweglich!)

Die Aufgabe der Erfindung besteht darin, eine statisch - existente Energie in Bewegung überzuleiten ohne die Position (Statik) dieser betreffenden Energie zu verändern, abgesehen von Veränderungen des Wirkungsgrades dieses ansonsten statisch verbleibenden Energiespenders.

Die durch bewegungslosen Druck oder Zug auf diesen erfindungsmässigen Apparat wirkende Energie provoziert dessen Bewegung genau solange und so intensiv, als der hier benannte statische Druck oder Zug anhält und wirkt. Diese Aufgabe wird erfindungsgemäss durch das Verfahren nach Anspruch 1 gelöst.

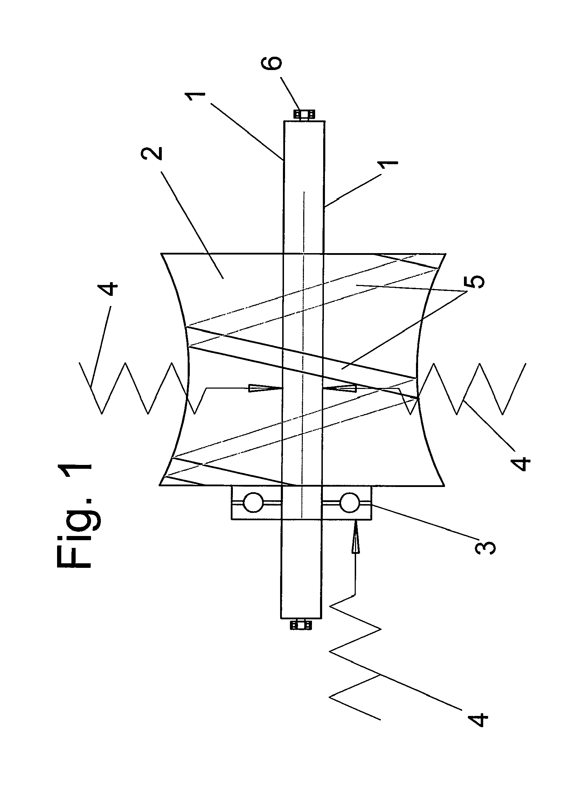

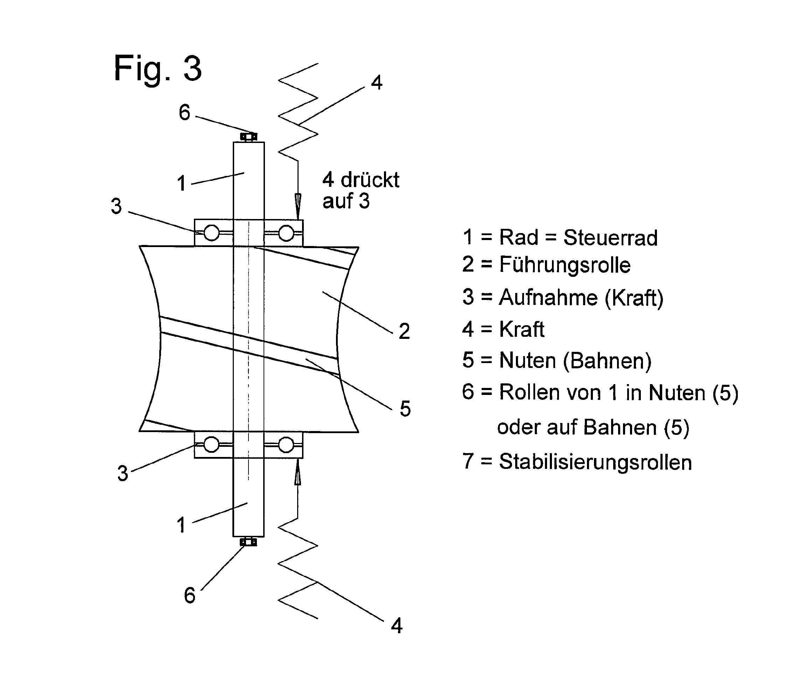

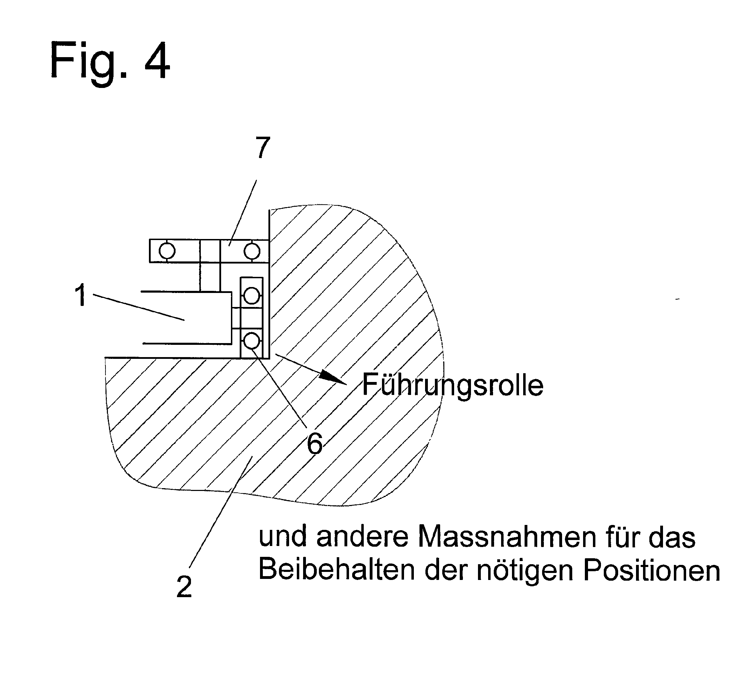

In Fig. 1 bis Fig. 5 wird eine der möglichen Varianten dargestellt, welchen allen dieselben Überlegungen für Weiterleitung statischer Energie bis zur nutzbaren Bewegung derselben, zugrunde liegen.

Die "Zuleitung oder Einführung" der statischen Energie kann über jede Seite oder den kreisförmigen Mantel , aber auch bei Verwendung von Kugel- bzw. elliptischer Formgebung für Teil 1 und 2, erfolgen und zwar einzeln oder in Kombination dieser Möglichkeiten. Es wird dazu jeweils ein Zwischenstück 3 benutzt, welches sowohl die Statik des Energiespenders als auch die Bewegung der übrigen Teile zulässt. Wenn der Energiespender mitdreht, muss sich besagtes Zwischenstück 3 zwischen demselben und dessen Widerlager befinden.

Die Steuerräder 1 sind mit drehbaren oder gleitenden Teilen 6, vorzüglich am Aussenkreis von 1, versehen. Diese Teile 6 sind schlüssig zu den Bahnen 5 der Führungsrolle (n) 2. Unter Einwirkung der statischen Energie 4, bewegen sich die beschriebenen Teile, Module folgendermassen:
Die spiralförmig verlaufenden Bahnen 5 der jeweiligen Führungsrolle 2 versetzen diese 2 auf Grund der Einwirkung der Steuerräder 1 in Rotation und die Steuerräder 1 werden auf Grund des Entlanggleitens - oder Rollens der Teile 6 auf oder an oder in der jeweiligen Bahn 5 der Führungsrolle 2 ebenfalls in Rotation gehalten oder in Rotation versetzt.

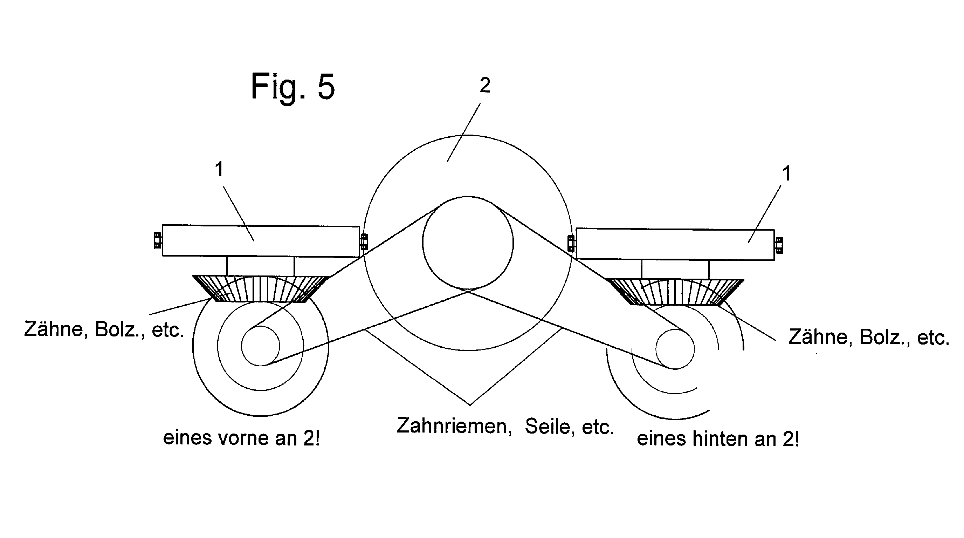

Bewegungs- Koordinationsteile Fig.5 haben dafür zu wirken, dass für die angestrebte Weiterleitung der Kraft des Energiespenders 4 nur jeweils ein Weg offen bleibt, um sich zu "entladen". Die Bewegungsabläufe von 1 und 2 aber sorgen dafür, dass der Energiespender 4 ohne Bewegung permanent mit seiner Kraft wirkt.

Die Erfindung ist nicht auf das hier Beschriebene und Dargestellte beschränkt. Vielmehr sind im Rahmen der Erfindung Konstruktions- Varianten möglich, mit welchen sich das hier Beschriebene und Dargestellte erreichen lässt.

Um einer "kraftaufhebenden" Wirkung im Sinne dieser Gesamtvorgabe bei diesen gerundeten Bestandteilen eines Apparates entgegenzusteuern ist es sinnvoll, durch konstruktive Maßnahmen die erforderliche oder gewünschte Arbeitsrichtung dieses Apparates vorzugeben. Es handelt sich in diesem Fall um den Apparat zur Ausnutzung von existenten Kräften, welche sich deshalb jedoch nicht bewegen müssen oder dürfen.

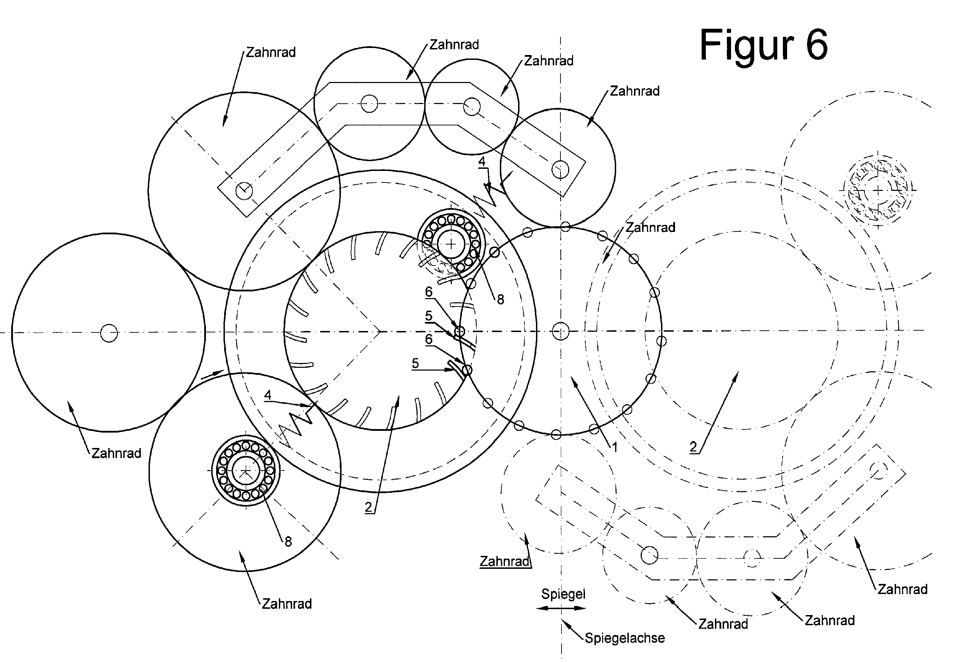

In Fig. 6 wird eine der möglichen Varianten zur "Richtungsgebenden Weitergabe" von statischer, unbeweglich-existenter Energie 4 (Fig. 1-6) an die Teile 1 und 2 der Fig. 6, und weiterführend an die Teile 1/6 und 2/5 Fig. 1-5 gezeigt.

Der hier vorgestellte Zusatz Fig. 6 ist notwendig, damit die in der Anmeldung von Jan. 2012 beschriebenen und dargestellten Möglichkeiten betrieben werden können, sowie es erforderlich ist.

Fig. 6 zeigt eine Scheibe, mit auf der Scheibenfläche fixierten drehbaren Teilen 6, deren Stirnseite zu einer Außen- und Innenbahn geformt sein kann.

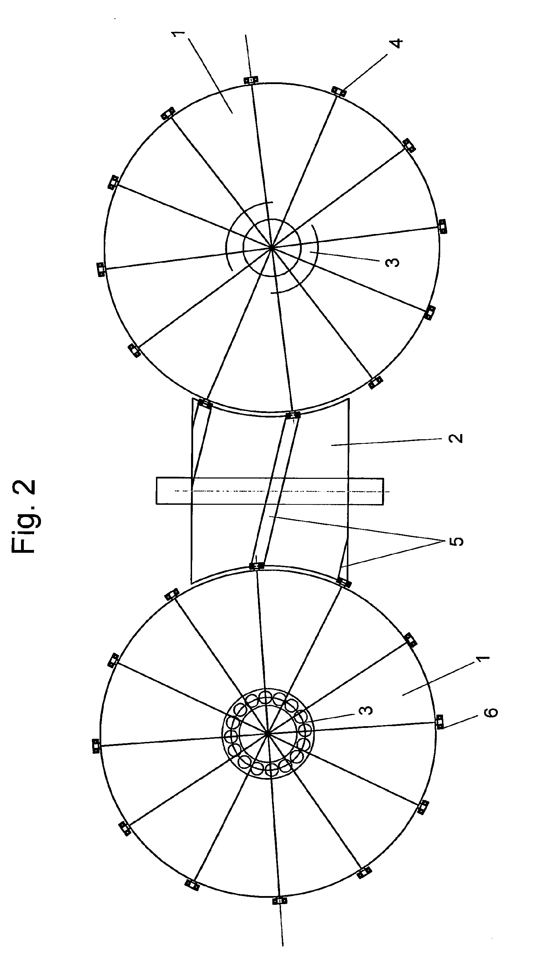

Entlang von fix gelagerten, drehbaren Teilen 8 Fig. 6. bewegt sich die Scheibe aufgrund der drehbaren Kontakte mit deren Innen- und Außenbahn in die von 4 Fig. 1-6 vorgegebene Kreisrichtung, wenn die innen und außen fixierten drehbaren Teile 8, Fig. 6 entsprechend positioniert sind und aber vor Allem aufgrund eines ständig abrollenden mit einer Scheibe 2 Fig. 6 welche mit entsprechend positionierten Bahnen 5 Fig.6 ausgestattet ist. 2 Fig. 6 kann drehbar ausserhalb des Mittelpunkts fixiert werden und nimmt vorzüglich über diese Mitte mit Unterstützung von 3 Fig. 1-5 den Druck von 4 Fig. 1-6 auf, welcher gemeinsam mit 1 Fig. 6 zu einer stetigen Weitergabe des Druckes von 4 Fig. 1-6 führt. Die Bewegung von 1 Fig.6 und 2 Fig. 6 muss gegenläufig sein! Die Bahnen 5 Fig. 6 und die rollenden Teile 6 Fig. 6 können sich auch abwechselnd an den Scheiben 1 Fig. 6 und 2 Fig. 6 befinden. Der fixierte aber drehbare Teil 8 Fig. 6 von der Innenbahn von 2 Fig. 6 ist positioniert dass sich 1 Fig. 6 gemeinsam aber gegenläufig mit 2 Fig. 6 nur in die richtige Richtung drehen kann. Die Bahnen von 2 Fig. 6 sind so ausgebildet, dass sie 2 Fig. 6 aber auch 1 Fig. 6 in diese Richtung vorwärts transportieren müssen. Weitere Teile 8 Fig. 6 können an der Außenbahn von 1 Fig. 6 so positioniert sein, dass sie die Kraftaufnahme von 1 Fig. 6 nicht negativ beeinflussen. 1 Fig. 6 kann auch als "Zwilling" gebaut werden. In diesem Fall wird 8 Fig. 6 innen über eine flache Halterung von ausserhalb 2 Fig.6 stabil fixiert. Eine Scheibe 2 Fig. 6 operiert dann als Doppel von unterhalb1 Fig. 6.

Diese "Paket", bestehend aus einmal 1 Fig. 6 und 2 Fig. 6 oder aus zwei x 1 Fig. 6 und zwei x 2 Fig. 6 kann jeweils beliebig oft aneinandergereiht wiederholt werden. 2 Fig. 6 liegt ganz oder teilweise über oder unter Fig. 6, 1.

All diese Positionen können auch umgedreht werden.

Das "Einfädeln" der Teile 6 Fig. 6 durch die Abstände der Teile 5 Fig. 6 oder umgekehrt wird durch vermehrte Anzahl der oben erwähnten "Zwillinge" beziehungsweise "Paketwiederholungen" möglich. Eine weitere Möglichkeit ist ein gezielter schnellerer Umlauf von 1 Fig. 6 gegenüber 2 Fig. 6 oder umgekehrt. Durch eine Winkelstellung von 1 Fig. 6 und 2 Fig. 6 zueinander besteht eine weitere Möglichkeit, doch sind dann bei 5 Fig. 6 und 6 Fig. 6 zusätzliche Verschneidungen zu berücksichtigen, etc.

Die Positionierungen von 1 Fig. 6 und 2 Fig. 6 sollen vorzüglich so sein, dass die Kontakte zwischen 5 Fig. 6 und 6 Fig. 6 jeweils ober- oder unterhalb des Mittelpunkts von 2 Fig. 6 und 1 Fig. 6 abgewickelt werden.

Vorzüglich über eine fixe Achse wird die Übertragung der Kraft 4 auf die Bahnenwalze 2 Fig. 1,2,3,4,5 vorgenommen. Die hängende Bahn 5 Fig. 1,2,3,4,5 der Bahnenwalze 2 Fig. 1,2,3,4,5 treibt dadurch über 6 Fig. 1,2,3,4,5 des Steuerrades 1 Fig. 1,2,3,4,5 dieses im Kreis und durch diese Operation wird eine Ausdehnung oder Bewegung im weitesten Sinne von 4 Fig. 1-6 verhindert.

An jedem "Paket", bestehend aus den Scheiben 1 und 2 muss ein Zahnradgetriebe Fig. 6 oder Zahnriemen, Ketten, Spindel, ect. dafür integriert werden, dass die erforderliche RotationsGeschwindigkeit exakt mit der Operation zwischen 5 und 6 übereinstimmt. Weiters, dass auch das Einfädeln von 6 durch 5 oder umgekehrt kontaktlos funktioniert. Dieses jeweilige Getriebe darf jedoch den Kraftinput von 4 über 3 auf 1 und/oder 2 nicht wirksam beeinflussen.

Die Energie/Kraft 4 kann von jeder Position aus auf 1 und/oder 2 zur Wirkung gebracht werden, wenn bei dieser Positionierung die bereits oben beschriebenen Notwendigkeiten berücksichtigt werden.

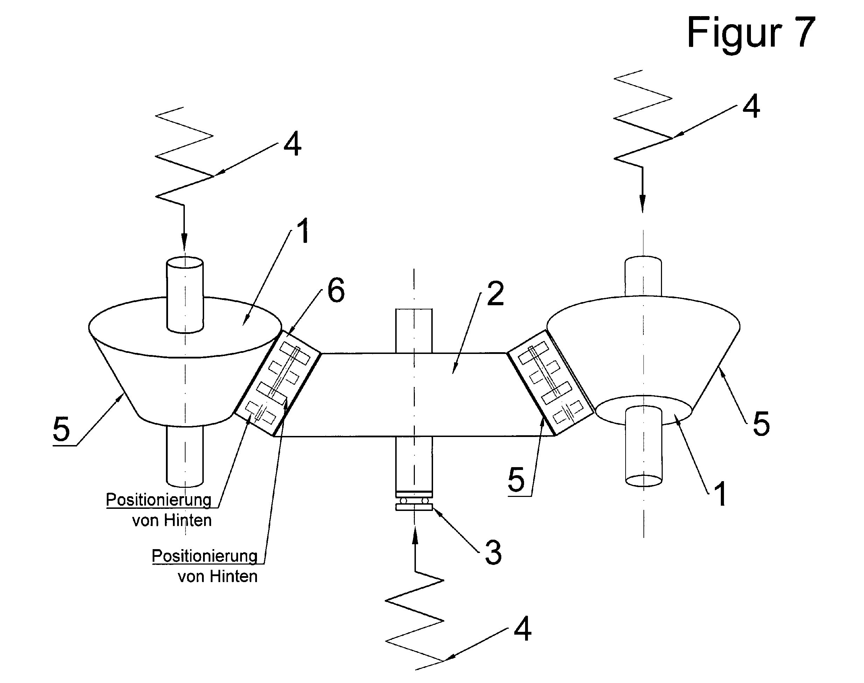

Aufgrund des Zusammenwirkens eines drehbaren Mittelpunkts von 1 Fig.6, der "Innenbahnrolle" 8 Fig. 6 von 2 Fig. 6 und den gemeinsam schlüssig wirkenden Teilen 5 Fig. 6 und 6 Fig. 6 ist es nötig oder sicherer, dass alles zusammen mit der Anmeldung von Jan. 2012 Fig. 1,2,3,4,5 eine Einheit bildet und operiert. Dadurch ist einerseits die erforderliche Arbeitsrichtung gewährleistet und andererseits eine Bewegung oder Ausdehnung von 4 Fig. 1,2,3,4,5 unmöglich; sodass aber der Druck von 4 Fig. 1,2,3,4,5 genügt um den gesamten Apparat in Bewegung und Rundlauf zu versetzen. In Fig. 6 wirkt z.B. die Kraft4, Fig. 1-6 über 8, Fig. 6 und/oder ein Zahnrad Fig. 6 auf Scheibe 2 Fig. 6 aktiv. Scheibe 1 Fig. 6 aber erhält die Kraft über 5, Fig. 6 und 6, Fig. 6 also passiv. Durch die Vereinigung der Teile von Fig. 1 bis 5 mit den Teilen von Fig. 6 zu einem Ganzen wird eine Sogenannte Wechselwirkung der Kraft 4 Fig. 1-6 erzielt. 4, Fig. 1-6, von 2 Fig. 6 wirkt auf 2 Fig. 1-5. 4 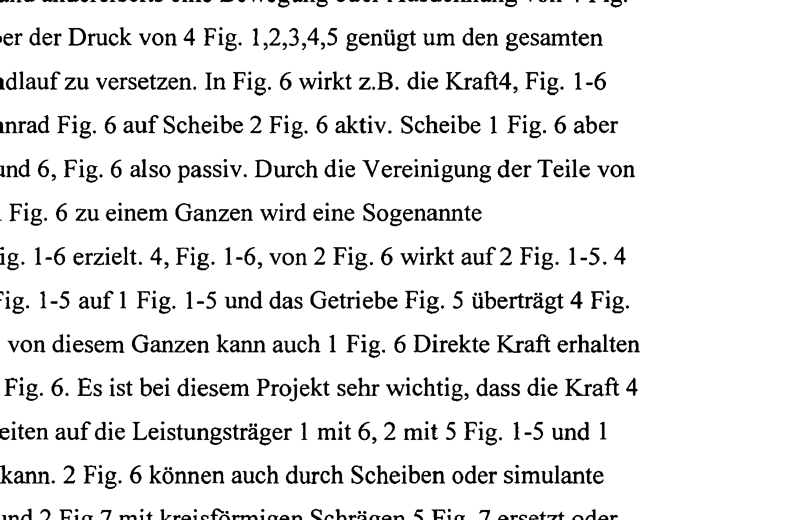 Fig. 1-6 wirkt vertikal über 3 Fig. 1-5 auf 1 Fig. 1-5 und das Getriebe Fig. 5 überträgt 4 Fig. 1-6 auf 1 Fig. 6. Nur innerhalb von diesem Ganzen kann auch 1 Fig. 6 Direkte Kraft erhalten und wird ebenfalls aktiv wie 2 Fig. 6. Es ist bei diesem Projekt sehr wichtig, dass die Kraft 4 Fig. 1-6 von zwei oder mehr Seiten auf die Leistungsträger 1 mit 6, 2 mit 5 Fig. 1-5 und 1 mit 6,2 mit 5 Fig. 6 einwirken kann. 2 Fig. 6 können auch durch Scheiben oder simulante geometrische Grundformen 1 und 2 Fig 7 mit kreisförmigen Schrägen 5 Fig. 7 ersetzt oder zusätzlich zu Fig. 1-6 ergänzt werden, wobei eine zwischen diesen geschrägten Kreisbahnen 5 Fig. 7 eine Kugel oder ein Walzenähnliches Rundteil 6 Fig. 7 so platziert und von Ausserhalb "abrollend" fixiert wird, dass 4 Fig. 1-7 sich auf jeden Teil 1 und 2 Fig. 7 unter-oder oberhalb der jeweiligen fix, drehenden Mittelachse auswirken muss!

## Patentansprüche

1. Verfahren zur Abnahme der Energie 4, welche infolge Gravitation, Federkraft, etc. latent vorhanden ist, mittels beweglichen und unbeweglichen Fig. 3 mechanischen Elementen oder Modulen, **dadurch gekennzeichnet, dass** hier eine Koordination von verschiedenen Bewegungen den jeweiligen Energiespender 4 in einer unbeweglich - statischen Positionierung wirken lässt und so eine ständige Erneuerung oder "Wiederholungspositionierung" des jeweiligen Energiespenders unnötig macht.

2. Verfahren nach Anspruch eins, **dadurch gekennzeichnet, dass** ein oder mehrere zur Drehbewegung ausgebildete Körper 1, 2, 3, 6, vorzüglich rund, die latente Energie des jeweiligen Energiespenders 4 aufnehmen und transportieren, und die Führungsrolle (n) 2 und deren Bahnen 5 in einem Winkel zum Steuerrad 1 operieren und so eine andere Dimension oder Operationsebene einnehmen als das Steuerrad 1 oder die Steuerräder 1 und deren Dimension oder Operationsebene.

3. Verfahren nach Anspruch eins + zwei, **dadurch gekennzeichnet, dass** ein solcher, auch "drehbeweglicher" Körper 1, in einem konstruktionsmässig und gewünschten Winkel zum Kraftverlauf aus dem Energiespender positioniert ist und dass ein ( oder mehrere) bewegliche Zwischenmodule 3 diesem Körper seine konstruktiv erforderliche Bewegung ermöglicht und den Energiespender 4 in seiner jeweils justierten statischen Position unbeweglich verbleiben und wirken lässt.

4. Verfahren nach Anspruch eins, dass ein (oder mehrere) drehbare Körper 2, vorzüglich zylinderähnlich mit geraden Fig.3, konkavem - Fig. 1 und Fig. 2, oder konvexer Mantelform, mit jeweils zu einem Teil 5 der Funktion von 6 schlüssig zu Diesen 6 in Anzahl und Distanzen, mit - zu 6 schlüssigen Bahnen 5 versehen wird und durch concertierte Bewegungen mit den anderen beweglichen Teilen eine Bewegung des Energiespenders 4 unnötig macht, dessen latent durch Druck oder Zug statisch wirkende Kraft zu verschiedensten Zwecken weitergeben kann.

5. Verfahren nach Anspruch eins - vier, dass ein ( oder mehrere) drehbare Körper 2 auch mit gegenläufigen Bahnen 5 und allen übrig möglichen und zur Schlüssigkeit gegenüber den anderen beweglichen Teilen nötigen Bahnen versehen wird (werden).

6. Verfahren nach Anspruch eins bis fünf, dass Bahnen 5 nach Fig. 4 ausgebildet sind, oder in allen anderen diesbezüglich zweckdienlichen Formen.

7. Verfahren nach Anspruch eins bis sechs, das die Teile 1 und 2 der Fig.1 bis Fig. 5 durch irgendein geeignetes Steuerung- System bewegungsmässig in Einklang gebracht werden. Zum Beispiel Fig. 5.

8. Verfahren nach Ansprüchen 1,2,3,4,5,6, 7, **dadurch gekennzeichnet, dass** schlüssig Teile 6 auf spiralförmigen Bahnen 5 unter Duck oder Zug, von einer oder mehreren Richtungen kommend, sich im Kreis des Steuerrades 1 drehen, aber gleichzeitig auch auf den vorgegebenen schlüssigen Bann 5 in vorgegebene Bewegung "gezwungen" werden und die Führungsrolle 2 in andauernde Drehung, ohne Längsbewegung, versetzt wird. Aus dem Wandern der Teil 6 wiederum auf den spiralförmigen Bahnen 5, der Führungsrolle ( n) 2 erfolgt auch beim Steuerrad 1 eine "unendliche Bewegung im Kreis". Dieser Vorgang wird durch Koordination nach Anspruch 7 konzertiert und in bewegungsmässiger Übereinstimmung begleitet.

9. Verfahren nach Anspruch 1 - 8, **dadurch gekennzeichnet, dass** ein Vorgang, wo ein Gegenstand ( z.B. Auto ) auf abfallender Bahn sich auf dieser Bahn entlang nach unten bewegt, umgedreht wird. Die Bahn 5 ( Spiralbahn 5) von Walze 2 bewegt sich unter Druck oder Zug dem Teil 6 des Steuerrades 1 entgegen und erbringt so die benötigte Bewegung.

10. Verfahren nach den Ansprüchen 1-9, **dadurch gekennzeichnet, dass** ein sich um seine Achse drehender Zylinder 2, oder diesem in anderer Form entsprechenden Körper 2, Träger 2 von einer oder mehreren Bahnen 5 - aller möglichen und zur Schlüssigkeit geeigneten Arten 5 belegt, aufgeschraubt, eingearbeitet, etc., ist und mittels einer derartigen Bahn 5 - abzüglich der Achsenlänge (- Distanz) des diese 5 tragenden Körpers 2 - eine kalkulierte oder unkalkulierte Weg - Roll- oder Gleitverlängerung zur Wirkung gegenüber einem - in diesem Fall beschriebenem Steuerrad 1 oder einem anderen schlüssigen Gegenstand 1 - bringt.
Dass sich ausserdem dieser Gegenstand 1 in einem vorzüglich neunziggradigem Winkel (immer von den gedachten oder realen Achsen der Teile 1 - 2 ausgehend), aber auch jeder anderswinkligen Anordnung - ausser einer Gleichgelagerten, welche sich nicht durch Abwinklung unterscheidenden Situierung gegeneinander - befinden kann.
Präzisierend handelt es sich in diesem Anspruch um die Ziffern 1 + 2 der dargestellten Fig. 1, 2, 3, 4, 5 und deren klar ersichtliche Zusätze mit den Ziffern 5 + 6 ! Alle diese Darstellungen und Figuren können auf alle geometrischen Formen gezeichnet und in die funktionelle Praxis übertragen werden, sofern sie der Funktionalität dieser Beschreibung und deren Ansprüchen entsprechen.

11. Verfahren nach dem Beispiel von Figur 6 **dadurch gekennzeichnet, dass** Konstruktionen nach der Art, wie mit Figur 6 eines stellvertretend gezeigt und auch beschrieben wird, für sich allein ohne Fig. 1-5 operationsfähig sein können.

12. Verfahren nach dem Beispiel von Fig. 6, für Beispiele wie in Fig. 1-5 benötigt, **dadurch gekennzeichnet, dass** fixierte Teile 8 Fig. 6, Innen- und/oder Außenbahnen der Teile 1 und/oder 2, Fig. 6, schlüssig und drehbar angebracht, für Teile 1 und/oder 2 Fig. 6 einen "gedachten" Mittelpunkt zur Konsequenz machen und entsprechend positioniert den "Einlass" und die Wirkung von 4, Fig. 1-6, auf die Teile 1 und/oder 2 Fig. 6 gewährleisten und aber gleichzeitig auch die Zentrierung außerhalb der "gedachten" Kraftverläufe im Bereich 1 und/oder 2 Fig. 6 sichern.

13. Verfahren nach Fig. 6, **dadurch gekennzeichnet, dass** die Teile 5 und 6 Fig. 6 an den Teilen 1 und 2 Fig. 6 abwechselnd oder unregelmäßig, aber schlüssig zueinander positioniert sind.

14. Verfahren nach Fig. 6, **dadurch gekennzeichnet, dass** die Teile 5 Fig. 6 ausgeformt sind schlüssig gemeinsam mit 6 Fig. 6 die Energie 4 Fig. 1-6 im Rundlaufen von 2 und 1 Fig. 6 transportieren und dass diese Rundläufe eine Bewegung von 4 Fig. 1-6, ausserhalb von Toleranzen welche sich innerhalb von beweglichen Teilen ergeben müssen, nicht zulassen.

15. Verfahren nach Fig. 1-6 und Anspruch 14 **dadurch gekennzeichnet, dass** vorzüglich Elektronische oder andere geeignete Mittel, sich ergebende Toleranzen in Bezug auf 4 Fig. 1-6, ständig korrigieren und so das Prinzip dieser Innovation mithelfen zu praktizieren und dass die Mittel sowohl im Bereich Fig. 6 als auch Fig. 1-5 entsprechend eingesetzt werden können.

16. Verfahren nach Fig. 6 **dadurch gekennzeichnet, dass** die Teile 1 und 2 Fig. 6 sich soweit überschneiden Fig. 6, dass sich aufgrund dessen ein "Arbeitsfeld" für 5 und 6 Fig. 6 ergibt, welches jeweils nach Drehrichtung ober- oder unterhalb ( im Bezug zur Druck-oder Zugwirkung von 4 Fig. 1-6) des gedachten oder existenten Mittelpunktes von 1 und/oder 2 Fig. 6 durch diese Überschneidung existent ist und dass die Kraft 4 Fig. 1-6 in diesem Bereich von 5 und 6 Fig. 6 immer gemeinsam und unausweichlich von geeigneten, weiteren Mitteln koordiniert wird

17. Verfahren nach Fig. 6 **dadurch gekennzeichnet, dass** 1 Fig. 6 mit 6 Fig. 6 vorzüglich oder Auch 2 mit 5 Fig. 6, als Zwilling (5 und/oder 6 Fig. 6 auf beiden Flächen von 1 oder 2 Fig. 6) ausgebildet ist und dass diese Variante, aber auch die Einfache jeweils zusätzlich in- oder exklusive von 1 oder 2 Fig. 6 zusätzlich auch gespiegelt wird und dass sich jeder dieser Maßnahmen und beide gemeinsam unbegrenzt nach Bedarf wiederholen und dann jeweils ein Gewerk bilden. Der Bedarf wird sich hauptsächlich aus den Belastungen von 5 und 6 Fig. 1-6 durch 4 Fig. 1-6 ergeben.

18. Verfahren nach Fig. 6 und Anspr. 17 **dadurch gekennzeichnet, dass** der physikalische Kontaktbereich von 5 und 6 Fig. 6 auf den gesamten flächenseitigen Bereich von 1 und 2 Fig. 6 konstruktiv ausgedehnt werden kann und dass das "Einfädeln" von 6 zwischen 5 Fig. 6 oder umgekehrt durch divergierende Tempi zwischen 1 und 2, oder umgekehrt aus dem Konstruktiven heraus für die Praxis möglich wird. Diesem Erfordernis dienlich kann auch eine Erweiterung nach Anspruch 17 sein, jedoch soll jeweils ununterbrochen mindestens 1 Paar bestehend aus 5 und 6 Fig. 6 operativ unter Druck von 4 Fig. 1-6 sein. Auch eine Schrägstellung zwischen 1 und 2 Fig. 6 bietet sich als Möglichkeit diesbezüglich an und wird beansprucht.

19. Verfahren nach Fig. 1-6 in Übereinstimmung mit den bestehenden Ansprüchen 1-18 **dadurch gekennzeichnet, dass** an jedem "Paket" mit den Scheiben 1 und 2 Fig. 6 ein Getriebe ausreichend integriert und abgestimmt sein kann, dass die jeweilige Rotationsgeschwindigkeit von 5 und 6 Fig. 6 Dadurch exakt und unausweichlich beibehalten und garantiert ist. Ein derart gefordertes Getriebe Fig. 1-6 kann sich (und/oder) aus Zahnrädern, Zahnriemen, Ketten, Spindeln, etc. zusammensetzen. Die Besonderheit dieses Getriebes ergibt sich daraus, dass, obwohl die Energie 4 Fig. 1-6 von jeder möglichen Seite einwirken kann, der reale und "gedachte" Kraft-Input jedoch nicht von besagtem Getriebe hemmend beeinflusst werden darf (ausser konstruktiv gegebener Reibung). Dieses Getriebe nimmt jedoch die Kraft von 4 Fig. 1-6 über 1 und 6 und 2 und 5 Fig. 1-6 gesamthaft auf und sichert 1 und 2 Fig. 6 unter Berücksichtigung der bereits oben beschriebenen und geforderten Notwendigkeiten positionsmässig.

20. Verfahren nach Fig. 7 **dadurch gekennzeichnet, dass** Teile 1 und 2 Fig. 7 mit kreisförmigen Schrägen 5 Fig. 7 versehen sind. Wobei eine Zwischen diesen geschrägten Kreisbahnen 5 Fig. 7 positionierte Kugel oder ein walzenähnliches Rundteil 6 Fig. 7 platziert und von Ausserhalb vorzüglich "abrollend" fixiert wird und dass dieser Teil 1 mit 5 und 6 Fig. 7 und Teil 2 mit 5 und 6 Fig. 7 unbegrenzt vervielfacht wirken kann und dies allein für sich oder gemeinsam mit den Teilen von Fig. 1-6. Ebenso wirkt auf einen oder mehrere Teile Fig. 7 die Kraft 4 Fig. 1-7 und bringt diese Teile Fig. 7 auf Grund der Position von 6 Fig. 7 zum drehen. Diese Position von 6 Fig. 7 muss immer ober- oder unterhalb der jeweiligen Mittelachse von Teil 1 und 2 Fig. 7 sein.

21. Verfahren nach Fig.6, **dadurch gekennzeichnet, dass** Scheiben oder Teile mit Innen - und Aussenbahn - vorgesehen für Abläufe mit Teilen 8 Fig. 6 auch in separater Position platziert und vorzüglich über Achsen oder Getriebe mit 1 und / oder 2, Fig. 6 wirksam verbunden sind.
